# EUROPEAN PATENT SPECIFICATION

(11) **EP 3 412 602 B1**
(45) Date of publication and mention of the grant of the patent: **04.05.2022**
(21) Application number: 17747353.5
(22) Date of filing: 30.01.2017
(51) Int. Cl.: B65G 1/137, G06Q 10/08

(54) **INSTRUCTION DEVICE AND SORTATION SYSTEM**
ANWEISUNGSVORRICHTUNG UND SORTIERSYSTEM
DISPOSITIF D'INSTRUCTION ET SYSTÈME DE TRI

(30) Priority: 01.02.2016 JP 2016016960
(43) Date of publication of application: 12.12.2018
(73) Proprietor: Okura Yusoki Kabushiki Kaisha, Hyogo 675-8675 (JP)
(72) Inventor: ISHII Hironori, Kakogawa-shi Hyogo 675-8675 (JP); TODOROKI Shuji, Kakogawa-shi Hyogo 675-8675 (JP); FUJIMOTO Junichi, Kakogawa-shi Hyogo 675-8675 (JP)
(74) Representative: Ablett, Graham Keith
(86) International application number: PCT/JP2017/003229
(87) International publication number: WO 2017/135197

(56) References cited:
- EP-A1- 2 554 496
- DE-A1- 19 620 569
- DE-A1- 19 856 762
- JP-A- H10 167 428
- JP-A- 2013 043 736
- JP-A- 2013 086 939
- JP-A- 2014 028 697
- JP-A- 2014 230 219
- JP-A- 2015 129 037
- JP-A- 2016 117 582
- JP-A- 2016 169 080
- US-A1- 2008 183 328
- US-A1- 2010 121 480
- Kardex Remstar: "New Light Pointer Increases Pick Accuracy in Shuttle VLM", , 19 December 2012 (2012-12-19), XP055653968, Retrieved from the Internet: URL:https://www.kardex-remstar.com/en/news /news-kardex-remstar/news-detail/article/n ew-light-pointer-increases-pick-accuracy-i n-shuttle-vlm.html [retrieved on 2019-12-18]

## Description

The present invention relates to an instruction device and a sorting system capable of contributing to increase in working efficiency.

For example, an instruction device described in PTL 1 is known as an instruction device that instructs a worker on a working target by light illumination on an illumination position corresponding to the working target.

This conventional instruction device includes illumination means (spotlight) that illuminates light, an angle adjusting mechanism that moves the illumination means, and control means that controls the illumination means and the angle adjusting mechanism.

Then when work on one working target is completed and work is to be done on a different next working target, the illumination means moves an illumination direction from a position corresponding to one illumination position to a position corresponding to a different illumination position. After the movement, the illumination means starts illumination to instruct a worker on the different illumination position to be subjected to work next.

### CITATION LIST

### Patent Literature

PTL 1: Japanese Laid-open Patent Publication No. 7-309409
PTL 2: DE 196 20 569 A1 discloses an instruction device according to the preamble of claim 1.

Hence, if the one illumination position and the different next illumination position are at a long distance, or if multiple working targets are instructed at random, for example, the worker takes time in finding light illuminated on the different illumination position to be subjected to work next, causing the risk of decreased working efficiency.

The present invention has been made in view of such circumstances and is intended to provide an instruction device and a sorting system capable of contributing to increase in working efficiency.

DE 196 20 569A1 describes optical identification of containers. A plurality of individual storage compartments are arranged in rows and columns and materials are stored in the containers for manual removal. A light beam can be directed to each container which indicates that it is the next container from which material is to be manually removed.

Kardex Remstar: "New Light Pointer Increases Pick Accuracy in Shuttle VLM" 19 December 2012 describes a light pointer which can direct an operator to a specific part location. The light pointer is mounted to a slider that moves horizontally on a guiding system. The light pointer navigates the operator to a location where the exact part can be picked. Once a part has been picked from a location, the light pointer can swivel to the next part location on a pick list.

JP2014-230219 A describes a system for accurately transmitting a work instruction to a worker from an instructor. The instructor uses the system to input a work instruction to the worker and an illumination means shows a trajectory to the worker in real-time to assist them with replenishing a storage rack.

### SOLUTION TO PROBLEM

According to one aspect of the present invention there is provided an instruction device according to claim 1 to instruct a worker on one storage space as a working target by light illumination, the one storage space belonging to multiple storage spaces set within a predetermined range, the instruction device comprising:-
illumination means that illuminates light;
an angle adjusting mechanism that changes the posture of the illumination means; and
control means configured to control the illumination means and the angle adjusting mechanism;
wherein the control means comprises a storage portion that storesan operation objective for the angle adjusting mechanism for realizing the posture of the illumination means corresponding to each of the respective multiple storage spaces;
wherein the control means is configured to operate the angle adjusting mechanism to change the posture of the illumination means to attain an operation objective;
wherein the control means is configured to make the illumination means start light illumination before the operation of the angle adjusting mechanism to attain the operation objective is completed; and
wherein the control means, after the operation of the angle adjusting mechanism to attain the operation objective is completed, is configured to operate the angle adjusting mechanism continuously so as to change the illumination direction of light from the illumination means continuously within a predetermined range while making the illumination means illuminate light.

In one embodiment, when a working target is changed from the one storage space to a different storage space, the control means is configured to start the operation of the angle adjusting mechanism for switching from an operation objective at the one storage space to an operation objective at a different storage space.

In another embodiment, the storage portion stores an operation objective as a reference target for the angle adjusting mechanism corresponding a reference posture as one posture of the illumination means; and
wherein the control means is configured to operate the angle adjusting mechanism to attain the reference target after work by the worker at the one storage space is finished.

In one case, the control means is configured to make the illumination means start light illumination in a period from before start of the operation to immediately after start of the operation of the angle adjusting mechanism to attain the operation objective at the different storage space.

In another embodiment, the storage portion stores multiple operation objectives for the angle adjusting mechanism to be attained at the one storage space and operation order for the multiple operation objectives; and
wherein after the operation of the angle adjusting mechanism to attain the operation objective is completed, the control means is configured to operate the angle adjusting mechanism so as to pass the multiple operation objectives by following the operation order while making the illumination means illuminate light.

According to another aspect of the present invention there is provided a sorting system in claim 6 including the instruction device as hereinabove defined.

### ADVANTAGEOUS EFFECTS OF INVENTION

The present invention is capable of contributing to increase in working efficiency.

### BRIEF DESCRIPTION OF DRAWINGS

[Fig. 1] Fig. 1 is a front view of a sorting system according to an embodiment of the present invention.
[Fig. 2] Fig. 2 is a side view of the sorting system.
[Fig. 3] Fig. 3 is a front view of an illumination unit in the sorting system.
[Fig. 4] Fig. 4 is a side view of the illumination unit.
[Fig. 5] Fig. 5 is a plan view of the illumination unit.
[Fig. 6] Fig. 6 is an outline configuration view of the sorting system.
[Fig. 7] Fig. 7 is a flowchart for the sorting system.
[Fig. 8] Fig. 8 is a front view of display means in the sorting system.
[Fig. 9] Fig. 9 is an explanatory view of the sorting system (first pattern of light path).
[Fig. 10] Fig. 10 is an explanatory view of the sorting system (second pattern of light path).
[Fig. 11] Fig. 11 is an explanatory view of the sorting system (third pattern of light path).
[Fig. 12] Fig. 12 is an explanatory view of the sorting system (fourth pattern of light path).
[Fig. 13] Figs. 13(a) to 13(d) are views showing patterns of movement of light within predetermined ranges.
[Fig. 14] Figs. 14(a) and 14(b) are outline configuration views showing a modification of a projection device in the sorting system.
[Fig. 15] Figs. 15(a) and 15(b) are outline configuration views showing a different modification of the projection device in the sorting system.
[Fig. 16] Fig. 16 is an outline configuration view showing a modification of the illumination unit in the sorting system.

An embodiment of the present invention will be described by referring to the drawings.

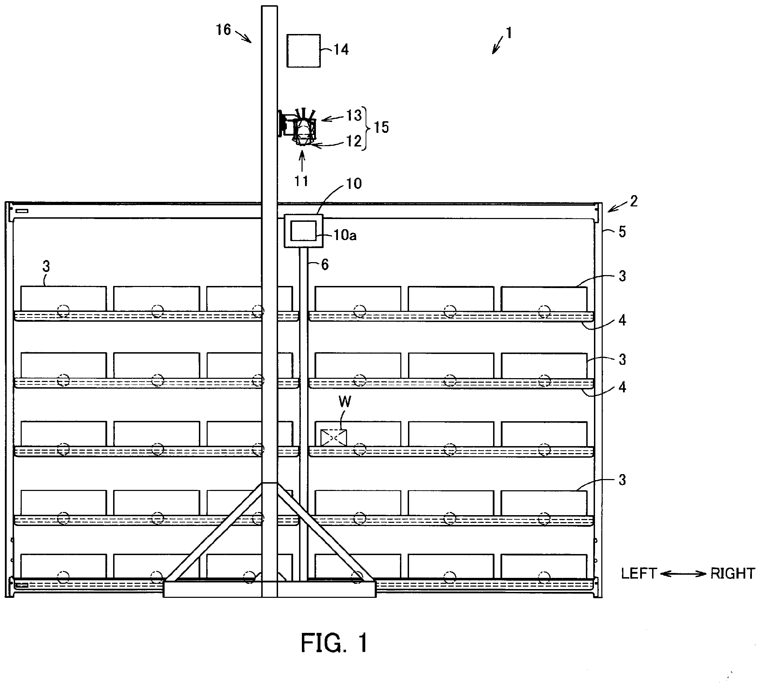

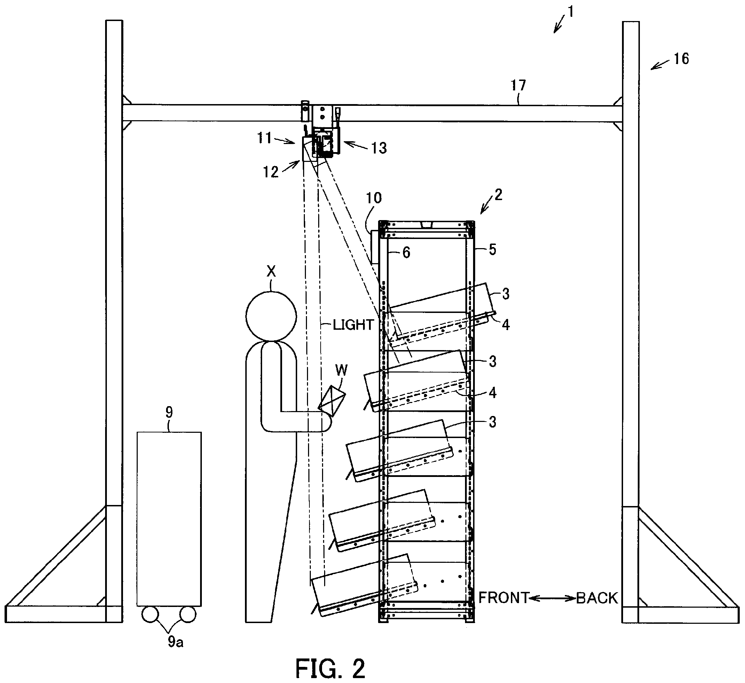

In Figs. 1 and 2, a sorting system is denoted by 1. The sorting system 1 includes a housing rack 2 to house items W as multiple products.

Multiple containers 3 are placed in a matrix (five lines and six rows, for example) in the housing rack 2. The container 3 is an item housing part (opening) in which the item W is housed so as to be capable of being taking in and out of the container 3. The container 3 is a box-like container having an open upper side and is placed on a rack section 4 of the housing rack 2. It is noted that the container 3 may be a dished tray, for example.

In addition, multiple storage spaces to become targets of sorting work are set in the housing rack 2. Referring to Fig. 1, 30 storage spaces in total in five lines and six rows for sorting work are set in the housing rack 2. Each container 3 is placed in a corresponding predetermined storage space, thereby placing 30 containers 3 in total inside the housing rack 2. Here, each storage space is set by dividing space in the housing rack 2 within a predetermined range into multiple sections. However, the predetermined range is not limited to a range in the housing rack 2 but may be a predetermined range on a conveyor on which the container 3 is placed, for example. Alternatively, each container 3 itself placed in the housing rack 2 may be set as a storage space.

The housing rack 2 includes a frame section 5 to which rack sections 4 in multiple tiers are attached fixedly. Display means (display unit) 10 with a liquid-crystal touch panel display section 10a is attached to the frame section 5. More specifically, the frame section 5 includes a support column 6 located at a front central position of the housing rack 2 in the right-left direction and extending lengthwise in the top-down direction. The display means 10 is attached to an upper end portion of the support column 6. Specifically, the display means 10 is provided adjacent to the upper end of the front central position of the housing rack 2 in the right-left direction.

In addition, the sorting system 1 includes an instruction device 11 that instructs a worker (secondary picker) X on a container 3 to be subjected to work (work of housing an item W) next by illuminating light on the container 3 in a storage space.

It is noted that in this embodiment, light from the instruction device is illuminated on the container 3 in a storage space for specifying the storage space as a working target. A lateral side of the container 3 functions as an illumination position to receive light illumination. Alternatively an illumination position may be the container 3 itself or a position near the container 3. Furthermore, also in a case where each container 3 in the housing rack 2 is set as a storage space, an illumination position may be the container 3 itself or a position near the container 3.

Thus, the worker responsible for secondary sorting work (secondary picker) X houses (introduces) an item W collected in a collection cart 9 as collection means by a worker responsible for primary sorting work in a previous step (primary picker) into a container 3 instructed by the instruction device 11 by light illumination.

It is noted that based on a primary picking list such as an order list, the worker (primary picker) not shown in the drawings collects all items W on the list in the collection cart 9, and then holds the collection cart 9 at a collection cart stop position set near the housing rack 2. In Fig. 2, the stop position for the collection cart 9 is a front central position of the housing rack in the right-left direction, which is a position facing the front side of the housing rack across a sorting work space for the worker (secondary picker) X prepared on the front side of the housing rack 2. It is noted that the collection cart 9 has traveling wheels 9a capable of traveling on a floor surface.

The instruction device 11 includes illumination means 12 that illuminates light as visual light for instruction, an angle adjusting mechanism 13 that adjusts the posture of the illumination means 12 to change a light illumination position (illumination direction of light from the illumination means 12) to be displayed toward the housing rack 2, and control means 14 that controls the operations of the illumination means 12, the angle adjusting mechanism 13, and the display means 10.

In addition, the illumination means 12 and the angle adjusting mechanism 13 form an illumination unit (projection device) 15 as one unit. The illumination unit 15 is attached to a support section 17 provided at an upper portion of a support frame 16 and extending lengthwise in the front-back direction so as to be adjustable in terms of a front-back position. It is noted that the illumination means 12 of the illumination unit 15 is located above (directly above) the display means 10 in a front view (see Fig. 1).

Then, based on control by the control means 14, the illumination means 12 and the angle adjusting mechanism 13 illuminate light on an illumination position set for each storage space to instruct a next container 3 to be subjected to work next by the worker X. When a working target is changed from one storage space to a different storage space, the angle adjusting mechanism 13 changes the posture of the illumination means 12 to change the illumination direction of illumination light so as to illuminate an illumination position corresponding to the different storage space with the light. Then, for this change in the illumination direction, the control means 14 starts light illumination (lighting) by the illumination means 12 before posture change of the illumination means 12 so as to point the illumination means 12 toward the illumination position corresponding to the storage space as a next working target is finished (before the operation of the angle adjusting mechanism 13 is completed). In other words, the control means 14 controls the illumination means 12 and the drive means 13 so as to draw a light path to a next container 3. It is noted that the lighting includes flashing.

Here, the illumination means 12 includes a light source part. The light source part is formed of a light-emitting diode (LED) or a semiconductor laser (LD), for example. The illumination means 12 is configured as a spotlight that illuminates light (spotlight) on an illumination position through lighting of the light source part. It is noted that in this embodiment, an LED light source is used.

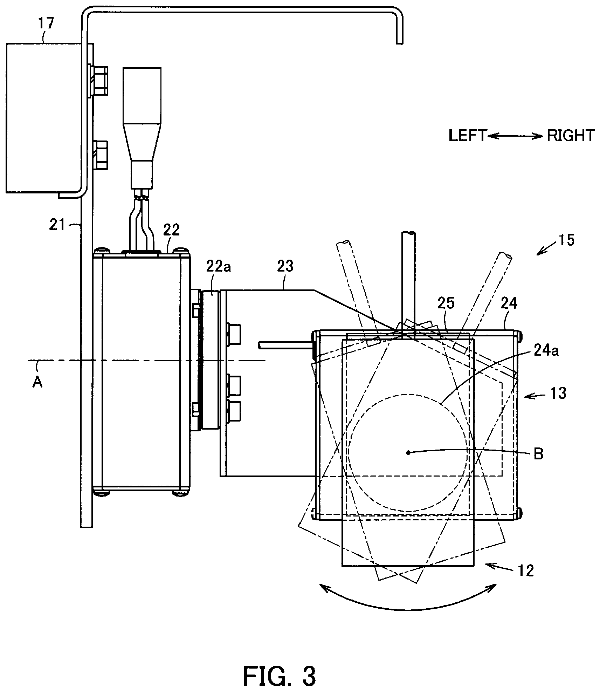

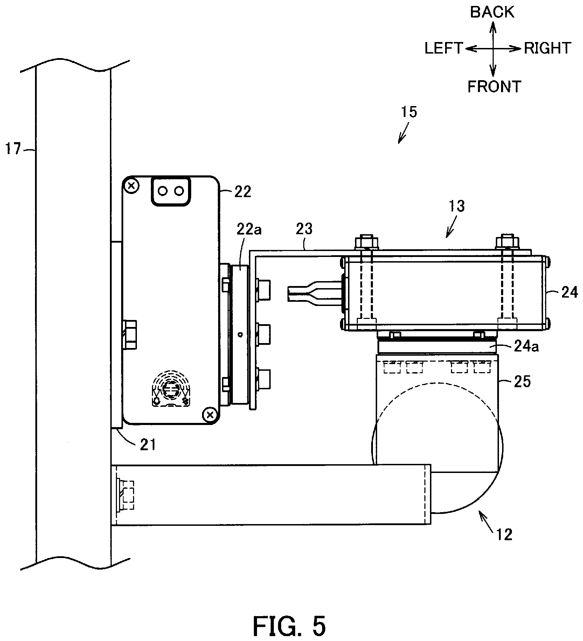

As shown in Figs. 3 to 5, for example, the posture of the illumination means (spotlight) 12 (illumination direction) is held by the angle adjusting mechanism (direction adjusting means) 13. The angle adjusting mechanism 13 is attached to the support section 17 of the support frame 16.

The angle adjusting mechanism 13 includes a first attachment plate 21 attached to the support section 17 of the support frame 16 so as to be adjustable in terms of a front-back position. A first drive body 22 is attached to the first attachment plate 21.

The first drive body 22 includes a rotary section 22a like a circular disc to rotate about a rotary center axis line (first rotary center axis line) A in the right-left direction. Then a second attachment plate 23 is attached to the rotary section 22a of the first drive body 22. A second drive body 24 is attached to the second attachment plate 23.

The second drive body 24 includes a rotary section 24a like a circular disc to rotate about a rotary center axis line (second rotary center axis line) B in the front-back direction. Then, a third attachment plate 25 is attached to the rotary section 24a of the second drive body 24. One illumination means 12 is attached to the third attachment plate 25.

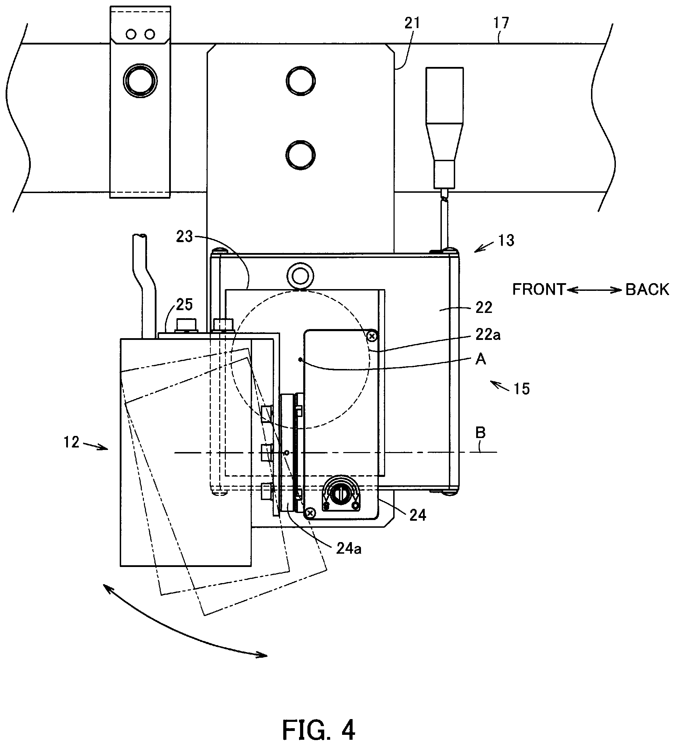

Then, the illumination means 12 rotates in the front-back direction about the rotary center axis line A based on the rotation of the rotary section 22a of the first drive body 22 (see Fig. 4). The illumination means 12 rotates in the right-left direction about the rotary center axis line B based on the rotation of the rotary section 24a of the second drive body 24 (see Fig. 3).

It is noted that each of the first drive body 22 and the second drive body 24 is formed using an electrically-driven rotary table with a built-in drive source formed of a motor, for example. The operations of the first drive body 22 and the second drive body 24 such as a rotation amount (rotation angle) and a rotation speed are controlled in response to a control signal from the control means 14.

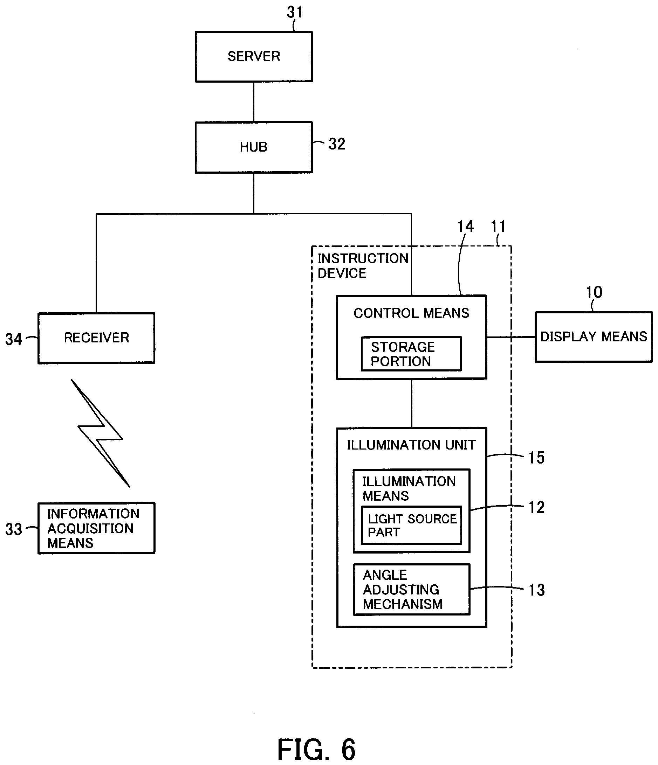

Furthermore as shown in Fig. 6, the sorting system 1 includes a server (PC) 31. A hub 32 is connected to the server 31. The control means (PLC) 14 that controls the operation of the illumination unit 15 is connected to the hub 32. And, in addition to the display means 10, the LED light source (light source part) of the illumination means 12 of the illumination unit 15 and the respective drive sources of the two drive bodies 22 and 24 of the angle adjusting mechanism 13 are connected to the control means 14. In addition, the control means 14 includes a storage portion storing operation information (operation program) about the operations of the illumination means 12, the angle adjusting mechanism 13, and the display means 10. It is noted that the storage portion may be provided either inside or outside the control means.

A Bluetooth (registered trademark) hub 34 is connected to the hub 32. The Bluetooth hub 34 is a receiver that receives information from a barcode reader (BCR) 33 as information acquisition means that acquires information from an identifier. It is noted that a barcode (BCD) as an identifier is assigned to each of an item W, a container 3, and the primary picking list.

The following describes the action, etc. of the sorting system 1 described above.

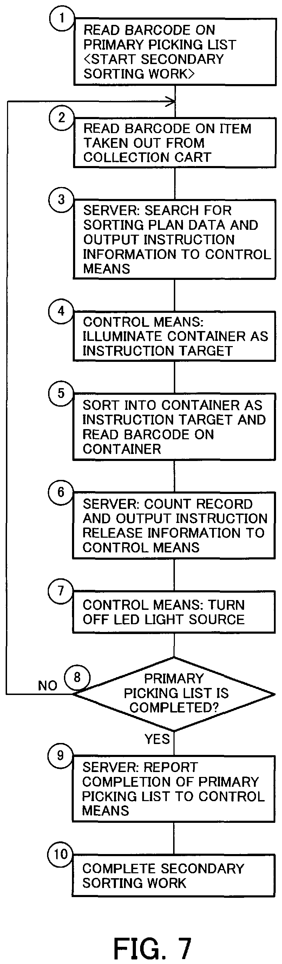

A flow of sorting process by the sorting system 1 will be described first based on the flowchart in Fig. 7.

The collection cart 9 housing items W on the primary picking list at random is placed at the collection cart stop position ahead of the housing rack 2 by a worker (primary picker).

Next, a worker (secondary picker) X reads a barcode attached to the collection cart 9 staying at the collection cart stop position or a barcode on the primary picking list linked with the collection cart 9 using the barcode reader 33 (step 1).

Then, the server 31 assigns sorting work information (order information, for example) corresponding to the primary picking list to each storage space in the housing rack 2. After receiving the primary picking list, the server 31 assigns sorting work to a storage space of high priority set in advance for increasing working efficiency in decreasing order of work load (the number of sorting works, the number of lines, and the number of items, for example).

Next, the worker X takes out one item W, for example, from the collection cart 9 located at the collection cart stop position, and reads a barcode on the item W taken out using the barcode reader 33, thereby acquiring item information (step 2).

Then, based on the item information about the item W taken out, the server 31 searches for sorting plan data containing unsorted item information from the sorting work information, specifies a storage space requested to accept introduction of this item W, and outputs instruction information to the control means 14 (step 3).

Based on the instruction information, the control means 14 controls the illumination means 12, the angle adjusting mechanism 13, and the display means 10 to light the LED light source, thereby illuminating light on a container 3 as an instruction target in which the item W is to be housed by the worker X (step 4). It is noted that a particular method of the illumination based on control by the control means 14 will be described later.

Next, the worker X houses and sorts the item W taken out from the collection cart 9 into the container 3 as an instruction target instructed by the light illumination by the illumination means 12. Then, the worker X acquires container information by reading a barcode on the container 3 in which this item W is housed using the barcode reader 33 (step 5).

Then, if the read container information about the container 3 matches container information about the container 3 placed in the storage space as an instruction target, the server 31 counts a sorting record and outputs instruction release information to the control means 14 (step 6). Meanwhile, if the read container information about the container 3 does not match the container 3 in the storage space as an instruction target, an "Unacceptable indication" is displayed on the touch panel display section 10a as a display section of the display means 10. It is noted that association between container information about the container 3 placed in each storage space and each storage space is managed in advance by the server 31.

The control means 14 controls the illumination means 12 based on the instruction release information to make the illumination means 12 turn off the LED light source (step 7).

Next, the server 31 determines whether or not housing work (introduction work) into containers 3 as instruction targets has been completed for all the items W in the collection cart 9 listed on the primary picking list (step 8).

If the server 31 determines that the housing work has been completed, the server 31 notifies the control means 14 of completion of sorting of all the items W on the primary picking list (step 9). It is noted that, if the housing work has not been completed, the flow returns to step 2 described above.

When the server 31 receives the notification of completion of sorting, the secondary sorting work by the worker X is completed for all the items W on the primary picking list (step 10).

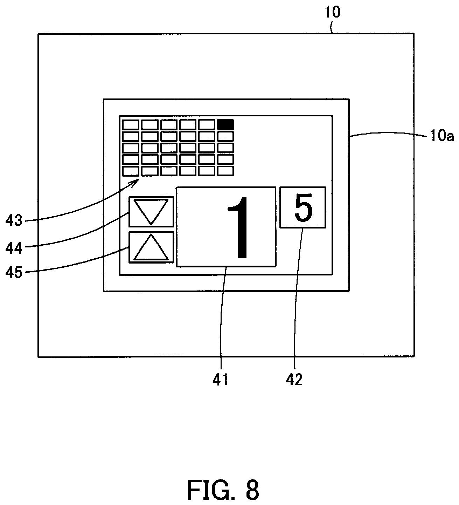

Next, Fig. 8 shows an example of a working screen displayed on the touch panel display section 10a of the display means 10.

This working screen includes a pick count display area 41 for display of a pick count ("1," for example) about an item W to be taken out from the collection cart 9, and a planned count display area 42 for display of a residual planned count ("5," for example) about the item W to be housed in a container 3 as an instruction target.

In addition, this working screen further includes multiple graphic objects displayed in a matrix corresponding to multiple containers 3 in the housing rack 2 (graphic objects displayed in five lines and three columns and located on each of the right side and left side, for example), and an instruction target display area 43 in which only one graphic object corresponding to one container 3 as an instruction target is displayed in a different format, for example, in a different color from the other multiple graphic objects. It is noted that the working screen on the display means 10 is not limited to the foregoing example but may have a configuration where an indication in five lines and three columns indicating the right half of the housing rack 2 is displayed as graphic objects corresponding to multiple containers 3 in the housing rack 2 in an upper left area of the working screen, an indication in five lines and three columns indicating the left half of the housing rack 2 is displayed as graphic objects corresponding to multiple containers 3 in the housing rack 2 in an upper right area of the working screen, and an operation menu button, a number corresponding to one container 3 as an instruction target, etc. are displayed between these indications in five lines and three columns, for example.

This working screen further includes a pick count change button for changing a pick count displayed in the pick count display area 41, specifically, a reduction button 44 and an increase button 45, for example.

Then, if multiple products W of the same type as a product W for which product information has been acquired by the worker X by being taken out from the collection cart 9 are required to be sorted into one container 3, and if the number of the products W of the same type to be sorted into the one container 3 is "five," for example, a total sorting count "5" is displayed in the planned count display area 42 and "1" showing an initial state is displayed in the pick count display area 41. In this case, if the worker X intends to process the five products together, the worker X can change a pick count displayed in the pick count display area 41 to "5" indicating a residual planned count by touching the increase button 45, for example. Then, the worker X can house and sort the five items W of the same type together into the one container 3 as an instruction target. It is noted that an indication in the pick count display area 41 is changeable to any count within the range of a planned count displayed in the planned count display area 42. In the foregoing case, this allows flexible work such as sorting the items one by one, sorting the five items together, or sorting only three of these items first as these three items can be found at easily recognizable positions in the collection cart 9, for example.

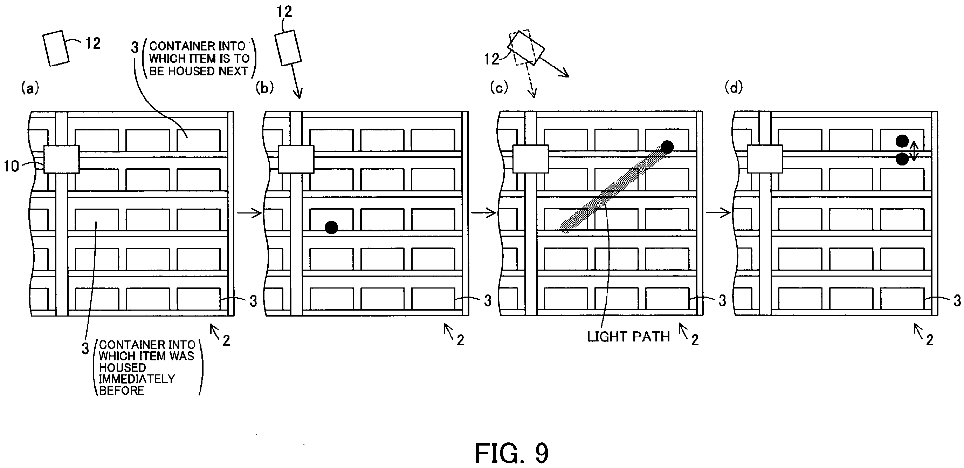

Particular illumination methods based on control by the control means 14 of the instruction device 11 will be described next by referring to Figs. 9 to 13.

The storage portion of the control means 14 stores at least one illumination position set in advance for each storage space. The storage portion stores an operation objective (rotation angle about each axis) for the angle adjusting mechanism 13 for pointing the light source part of the illumination means 12 toward an illumination direction responsive to each illumination position corresponding to each storage space and realizing the posture of the illumination means 12 responsive to the storage space. It is noted that, if multiple illumination positions are set for a storage space, one of these illumination positions can be set as an operation objective for changing the posture of the illumination means 12. In addition, a predetermined range other than a point may be set as an illumination position.

Firstly, Fig. 9 shows an example where, during movement of the illumination means 12 from a position corresponding to immediately preceding one container 3 where work (work of housing an item W) has been completed (a position indicated by alternate long and two short dashes lines in Fig. 9(c) and will be called a "previous position") to a position corresponding to a different next container 3 to be subjected to work next (a position indicated by solid lines in Fig. 9(c) and will be called a "next position"), the LED light source is lighted to start illumination before arrival at the next position.

More specifically, when the worker X first houses an item W into the one container 3 as an immediately preceding instruction target and reads a barcode on this container 3 using the barcode reader 33, work of sorting this item W is determined to be completed. Then, as shown in Fig. 9(a), the illumination means 12 turns off the LED light source.

Next, when the worker X takes out an item W from the collection cart 9 and reads a barcode on this item W using the barcode reader 33, information about the item W is transmitted to the server 31 and a next storage space into which this item W is to be sorted is determined. Then, in order to move the illumination means 12 to a posture for illumination of light on an illumination position set for the next storage space, the control means 14 operates the angle adjusting mechanism 13 for the next position based on an operation objective corresponding to the next storage space stored in the storage portion. More specifically, for switching from an operation objective at the previous position or at a neighboring position to an operation objective at the next position (rotation angles of the two rotary sections 22a and 24a), the rotary sections 22a and 24a in a state at the previous position are rotated by predetermined amounts.

In addition, concurrently with this operation of the angle adjusting mechanism 13, the control means 14 controls lighting operation as the operation of the illumination means 12. This operation of lighting the light source part of the illumination means 12 is started before the operation of the angle adjusting mechanism 13 to attain the operation objective at the next position is completed.

As shown in Figs. 9(b) and 9(c), for example, based on the operation objective at the next position stored in the storage portion, the control means 14 lights the LED light source of the illumination means 12 to coincide with start of the operation of the angle adjusting mechanism 13 from the previous position to the next position. Then, the state of lighting the light source part of the illumination means 12 (lighting state) is maintained until the posture change is finished, specifically, until the operation of the angle adjusting mechanism 13 to attain the operation objective is completed.

Specifically, while the lighting state of illuminating light toward the front side of the housing rack 2 is maintained, the posture of the illumination means 12 is changed from the previous position to the next position based on the rotations of the rotary sections 22a and 24a of the drive bodies 22 and 24 of the angle adjusting mechanism 13 by intended angles.

As a result, a light path is drawn on the front side of the housing rack 2 so as to show movement of light from an illumination position corresponding to immediately preceding one storage space to an illumination position corresponding to a different next storage space (see Fig. 9(c)). Thus, the worker X checks the movement of light with eyes to guide the line of sight of the worker X toward the container 3 placed in the storage space as a next working target. In this case, if the worker X directs the line of sight of the worker X to the previous position where the worker X did work immediately before in starting next operation, the worker is guided to the next working position by the light moving from the previous position to the next position. In this way, the location of the next position is found more easily to increase working efficiency than in the case of finding a next position in the housing rack 2 at random.

In addition, after arrival at the next position corresponding to the different next container 3, in order to make the storage space as an instruction target evident, the control means 14 operates the angle adjusting mechanism 13 continuously so as to move light (light illumination position) continuously within a predetermined range set for the storage space. The predetermined range can include the container 3. It is noted that the operation of the angle adjusting mechanism 13 forms the operation of moving the light repeated continuously.

Specifically, as shown in Fig. 9(d), for example, when posture change of the illumination means 12 by the angle adjusting mechanism 13 is completed and illumination light arrives at the next position, the light moves in the top-down direction between predetermined multiple set points within a predetermined range of each storage space such as two set points separated one above the other, for example, thereby emphasizing the storage space as a working target.

Specifically, multiple illumination positions are set for each storage space. Additionally, operation objectives for the angle adjusting mechanism 13 corresponding to the multiple illumination positions are stored in the storage portion. Illumination order showing the order of illuminating multiple illumination positions for each storage space is further stored in the storage portion as operation order of the angle adjusting mechanism 13. After the operation of the angle adjusting mechanism 13 for the storage space as a next working target is completed, the control means 14 operates the rotary sections 22a and 24a of the angle adjusting mechanism 13 while maintaining lighting of the illumination means 12. The operations of the rotary sections 22a and 24a of the angle adjusting mechanism 13 are performed so as to pass the operation objectives set for the storage space as a working target sequentially by following the operation order. A series of these operations is performed repeatedly.

By the action of the angle adjusting mechanism 13, the posture of the illumination means 12 is changed while the lighting state is maintained. Thus, from the viewpoint of the worker, the light illuminated from the illumination means 13 is visually recognized as light moving within the predetermined range. In the presence of this movement of light, even if the worker X loses sight of the path of the illumination position of light to move to a next storage space, the storage space as a working target is emphasized by the light moving repeatedly within the predetermined range. In this way, the worker X is allowed to easily find the different next container 3 as a next instruction target.

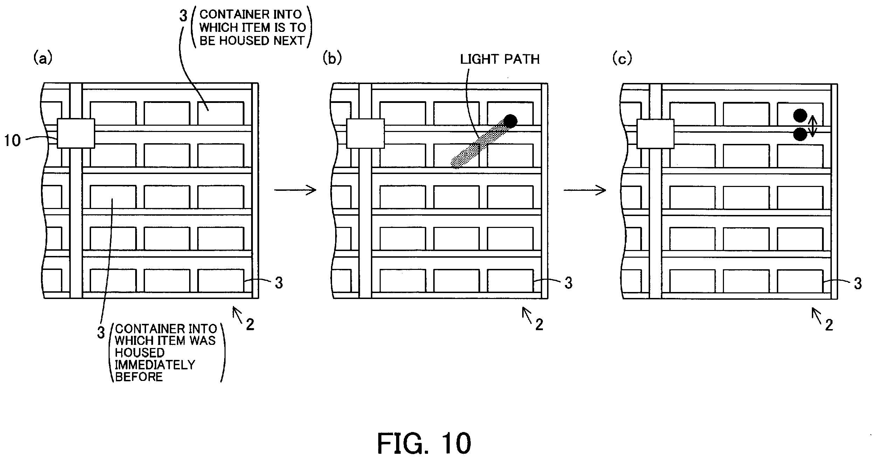

It is noted that in the foregoing example shown in Fig. 9, the control means 14 starts light illumination in a period from start of operation of posture change when the illumination means 12 is in the previous position (start of the operation of the angle adjusting mechanism 13) to before completion of the operation of posture change when the illumination means 12 is in the next position (before finish of the operation of the angle adjusting mechanism 13), specifically, at the start of changing the posture of the illumination means 12 from the previous position to the next position. Alternatively, as shown in Figs. 10(a) to 10(c), for example, light illumination may be started before arrival at the next position, specifically, while the posture is being changed from the previous position to the next position and before the posture change is completed.

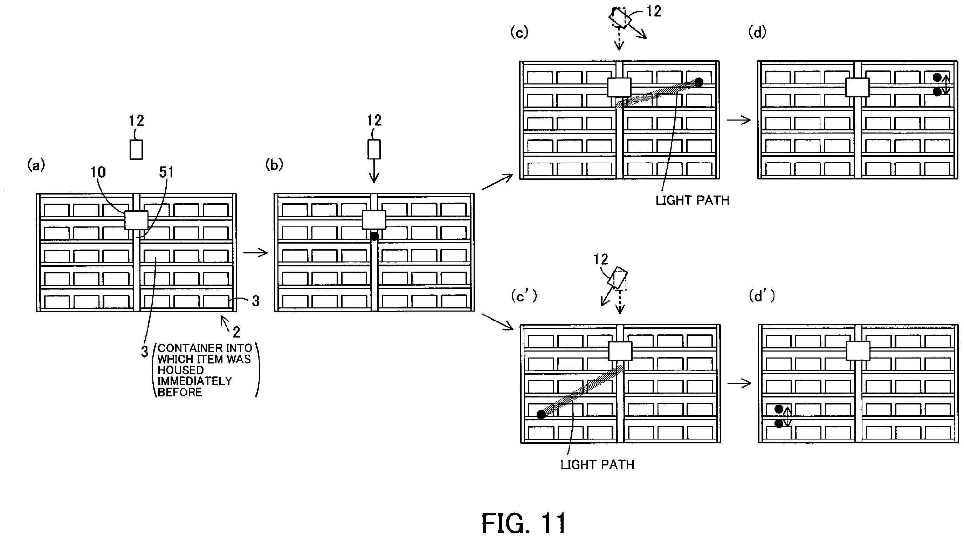

Then, Fig. 11 shows an example where, during movement of the illumination means 12 from a predetermined reference posture (a position indicated by alternate long and two short dashes lines in Figs. 11(c) and 11(c')) to a posture corresponding to a next storage space to be subjected to work next (a position indicated by solid lines in Figs. 11(c) and 11(c') and will be called a "next position"), the LED light source is lighted to start illumination before arrival at the next position. Here, Light from the illumination means 12 in the reference posture is illuminated on a reference illumination position 51 as a fixed illumination position.

In this example, each time work of housing an item W (or taking-out work) into or from a container 3 placed in each storage space is completed, the posture of the illumination means 12 returns to the reference posture (movement start position) corresponding to the reference illumination position 51. Specifically, an operation objective for the angle adjusting means for placing the illumination means 12 in the reference posture is stored as a reference target in the storage portion. If a worker finishes work targeted to one storage space, the control means 14 operates the angle adjusting mechanism 13 to attain the reference target. It is noted that the reference illumination position 51 is a position near the display means 10 located at the front central position of the housing rack 2 in the right-left direction, specifically, a position below and near the display means 10 on the front side of the support column 6 of the housing rack 2. The reference illumination position 51 has no correspondence to any storage space and is not a position for instructing any storage space or any container 3 placed in a storage space. It is noted that in principle, only one reference illumination position 51 is set in a working zone including multiple storage spaces in the housing rack 2 or the sorting system 1 assigned to and handled by one worker.

More specifically, when the worker X first houses an item W into one container 3 as an immediately preceding instruction target and reads a barcode on this container 3 using the barcode reader 33, the control means 14 turns off the LED light source of the illumination means 12 and operates the angle adjusting mechanism 13 to attain the reference target, as shown in Fig. 11(a). By doing so, the posture of the illumination means 12 is returned to the reference posture.

Next, the worker X takes out an item W from the collection cart 9, and reads a barcode on this item W using the barcode reader 33. Then, a storage space as a next working target corresponding to the read item W is determined by the server 31 as a next position. After the next position is determined, the control means 14 starts the operation of the angle adjusting mechanism 13 to attain an operation objective at the next position. Immediately before (including time several seconds before) start of the operation of the angle adjusting mechanism 13, simultaneously with start of the operation, or during the operation, the control means 14 lights the light source of the illumination means 12. As shown in Figs. 11(b) and 11(c), for example, the LED light source is lighted at the start of changing the posture of the illumination means 12 to the next position. While the state of lighting the LED light source (lighting state) is maintained, the illumination means 12 is tilted from the reference posture toward a rightward direction of the housing rack 2. In this way, the posture of the illumination means 12 is changed to a posture corresponding to the next storage space.

Specifically, if the next position is on the right side of the housing rack 2, the illumination means 12 moves from the reference posture to the next position on the right side of the housing rack 2 based on the rotations of the rotary sections 22a and 24a of the drive bodies 22 and 24 of the angle adjusting mechanism 13 by intended angles while the lighting state of illuminating light (red light, for example) toward the front side of the housing rack 2 is maintained. Then, the operation of the angle adjusting mechanism 13 to attain the operation objective at the next position is completed.

As a result, a light path from the reference illumination position 51 to the next container 3, specifically, a path of the illumination position of red light, for example, is drawn on the front side of the housing rack 2 (see Fig. 11 (c)). In this way, the line of sight of the worker X is guided to the next container 3. In this case, the worker X checks the reference illumination position 51 at a fixed position with eyes when the worker X starts next work to guide the line of sight of the worker X with light moving from the reference illumination position 51 to the next position. In this way, the location of the next position is found more easily to increase working efficiency than in the case of finding a next position in the housing rack 2 at random. Further, the reference illumination position 51 is a fixed position, so that the worker is not required to perform operation of moving the line of sight of the worker to the illumination position at the previous position after acquiring product information. Additionally, the reference illumination position 51 is set near the center of the housing rack 2. This eliminates the risk of decreasing working efficiency to be caused by a long light path presented to the worker if a position change from the previous position to the next position end is from the right end to the left end of the housing rack 2, for example.

In addition, after arrival at the next position corresponding to the next storage space, the illumination means 12 repeats predetermined operation so as to move light (light illumination position) within a predetermined range including the position of the storage space as an instruction target.

Specifically, as shown in Fig. 11(d), for example, on the arrival at the next position, the illumination means 12 repeats predetermined oscillating motion based on the rotations of the rotary sections 22a and 24a of the drive means 13 so as to move red light, for example, in the top-down direction between predetermined multiple set points within a predetermined range of each storage space such as two set points separated one above the other. By doing so, even if the worker X loses sight of the path of the illumination position of light, the worker X is still allowed to easily find the next storage space as a next instruction target.

It is noted that, if the next container 3 is on the left side of the housing rack 2, the illumination means 12 moves from the set position to the next position on the left side of the housing rack 2 while the lighting state of illuminating light (green light, for example) toward the front side of the housing rack 2 is maintained. As a result, a light path from the reference illumination position 51 to the next storage space, specifically, a path of the illumination position of green light, for example, is drawn on the front side of the housing rack 2 (see Fig. 1(c')). Then, light of green color, for example, moves in the top-down direction within the predetermined range (see Fig. 11(d')). In this way, different colors are used between light illuminated from the illumination means 12 to the right side of the housing rack 2 and light illuminated from the illumination means 12 to the left side of the housing rack 2. As a result, the worker X easily determines which one of the right region and the left region is a region including a working target.

In addition, in the foregoing example shown in Fig. 11, the illumination means 12 starts illumination before arrival at the next position, specifically, at the start of movement from the set position to the next position. Alternatively, like in the case shown in Figs. 10(a) to 10(c), for example, illumination may be started before arrival at the next position, specifically, during movement from the previous position to the next position.

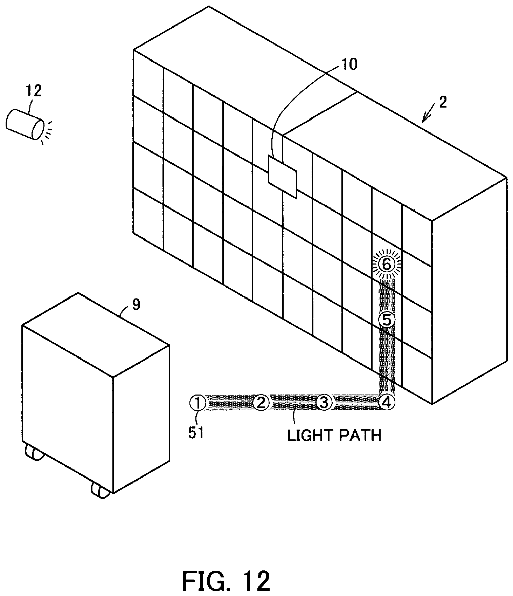

Furthermore, in the foregoing example shown in Fig. 11, the reference illumination position 51 is set at a position near the display means 10. Alternatively, the reference illumination position 51 may be set on a floor surface. After the worker X finishes one sorting work, for example, the worker X goes to the collection cart 9, takes out a product from the collection cart 9, and reads a barcode on the item W taken out from the collection cart 9 in preparation for next work. The worker X generally reads the barcode with the line of sight of the worker X being pointed downwardly. Thus, as shown in Fig. 12, for example, the reference illumination position 51 may be set at a position near the collection cart 9 stopping at the collection cart stop position and being located ahead of the central position of the housing rack 2 in the right-left direction, for example, specifically, at a position on the floor surface on which the collection cart 9 is to travel and near the collection cart stop position.

In this case, light illuminated from the illumination means 12 first moves on the floor surface from the reference illumination position 51 set on the floor surface to a position below a column in the housing rack 2 including a storage space as a next working target to instruct a column position in the housing rack 2. Then, the light moves upwardly to instruct this storage space. In other words, a light path from the reference illumination position 51 to the next storage space is drawn so as to extend from the floor surface near the collection cart 9 toward the front side of the housing rack 2.

Then, a worker generally reads a barcode on an item W with the line of sight of the worker being pointed downwardly. Thus, the worker is allowed to check the reference illumination position 51 with eyes while pointing the line of sight of the worker downwardly continuously from the operation of reading the barcode. In this state, the worker is guided by the light to the location of the next position. In this way, the location of the next position is found more easily to increase working efficiency than in the case of finding a next position in the housing rack 2 at random.

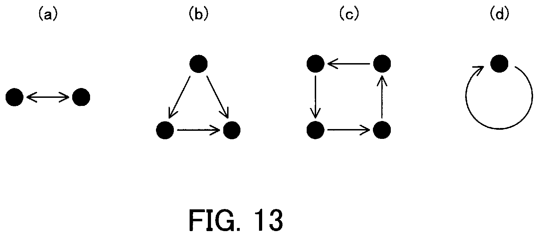

It is noted that in each of the foregoing examples, illumination positions set for forming a movement pattern of light for emphasizing a working target space within a predetermined range set in advance for each storage space are not limited to two set points separated one above the other. The number of set points may be determined arbitrarily. For example, set points may be two points separated to the right and left shown in Fig. 13(a), three points forming a triangle shown in Fig. 13(b), four points forming a rectangle showing in Fig. 13(c), or multiple points forming a circle shown in Fig. 13(d). In addition, order of illuminating multiple illumination positions may be determined in such a manner that the multiple points are illuminated in a one-stroke pattern. Alternatively, the multiple points may be illuminated in arbitrarily determined order.

Then, according to the sorting system 1 described above, based on control over the LED light source of the illumination means 12 and the drive sources of the drive bodies 22 and 24 of the angle adjusting mechanism 13 by the control means 14, the illumination means 12 draws a light path from an intended path beginning position to the position of a next container 3 (path terminal position) where the worker X is to do work next as preparatory operation. Thus, the worker X checks this path with eyes to guide the line of sight of the worker X toward the next container 3. Accordingly, this allows the worker X to easily find the next container 3 as an instruction target, thereby contributing to increase in working efficiency.

In addition, after arrival at a position corresponding to the next container 3 as an instruction target, the illumination means 12 repeats predetermined operation so as to move light within a predetermined range near the instruction target. Thus, even if the worker X loses sight of a light path, the worker X can still find the next container 3 as an instruction target easily with the light moving repeatedly and continuously, thereby contributing to increase in working efficiency. It is noted that, even if there is variation in the tilt or position between the containers 3 resulting from the configuration of the housing rack 2, for example, the worker X is still allowed to specify the container 3 as an instruction target by moving light within the predetermined range responsive to the next container 3 as an instruction target.

It is noted that a light path drawn by the illumination means 12 of the illumination unit 15 is not limited to a continuous path in a straight line resulting from continuous lighting of the light source part but may be a discontinuous path resulting from flashing of the light source part, for example.

In addition, a path of illumination light may be drawn by movement of the light along a predetermined route entirely or part of the route, by movement of the illumination light in a lighting state from a start position to an arrival position, or by movement of the illumination light along at least one of a fixed range after the start position and a fixed range before the arrival position. Additionally, an intermediate part of the movement route of the illumination light from the start position to the arrival position may be omitted by turning off the illumination light.

In addition, Light emitted from the light source part of the illumination means 12 may differ in color between a state where the angle adjusting mechanism 13 is stopping and a state where the angle adjusting mechanism 13 is operating. Specifically, the color of emitted light can be changed for distinctively showing whether the light is being used for instructing a working target or whether the light is moving before arriving at a working target. By doing so, the worker X is allowed to determine an operating state easily.

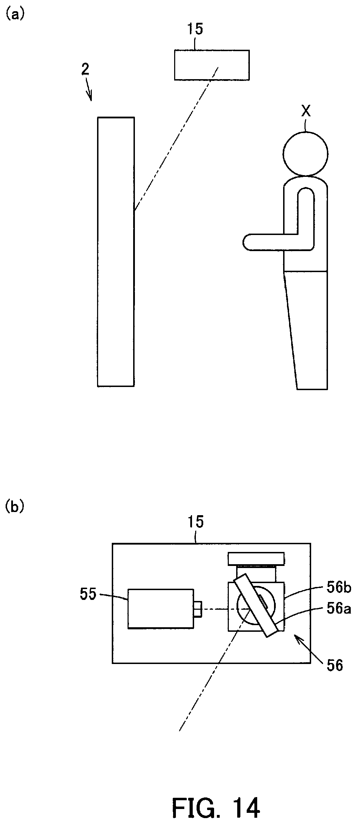

As long as the projection device (illumination unit 15) is configured to allow movement of illumination light, the projection device is not limited to a configuration including the illumination means 12 and the angle adjusting mechanism 13. As shown in Fig. 14, for example, the projection device may have a configuration including illumination means 55 and reflection means 56. The reflection means 56 includes a reflector 56a, and an angle adjusting mechanism 56b that adjusts the angle of the reflector 56a by rotating the reflector 56a. It is noted that the angle adjusting mechanism 56b has the same configuration as the foregoing angle adjusting mechanism 13. Then, light illuminated from the illumination means 55 is reflected on the operable reflection means 56 to adjust the illumination direction of the light. By making such adjustment of the illumination direction of the light, the movement and illumination position of the light are changed. It is noted that the illumination direction of the light may be adjusted by operating both or one of the illumination means 55 and the reflection means 56.

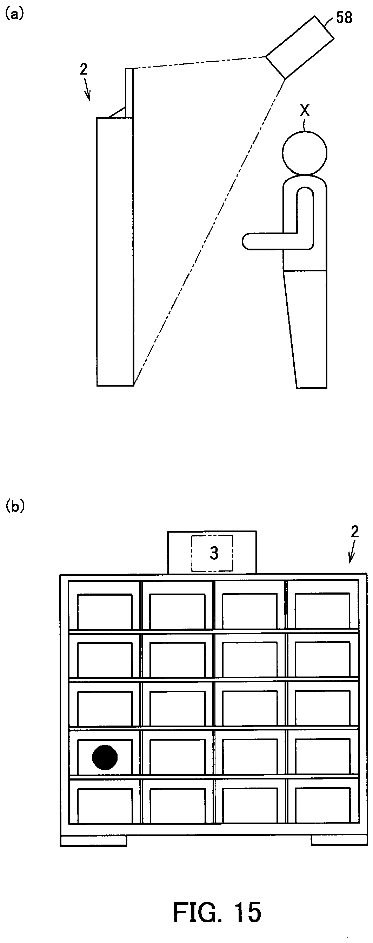

In addition, as shown in Fig. 15, a projector 58 may be used as the projection device. In this case, multiple storage spaces may be located within the range of projection from the projector 58. Projection showing movement of an image lighted with light to a position corresponding to a storage space within the range of the projection may be projected from the projector. An image (projection) showing work information may be displayed within the range of the projection from the projector 58, and this image may be used as display means.

In addition, the configuration with one illumination unit 15 provided for one housing rack 2 is not a limited configuration. The number of the illumination units 15 may be determined arbitrarily. Multiple illumination units 15 may be provided. By the use of multiple illumination units 15, even if illumination light from one illumination means 12 is blocked by a worker or even if one illumination means 12 is broken, for example, a working target in the housing rack 2 can still be instructed using illumination light from different illumination means 12. Even if one illumination means 12 fails to function, decrease in working efficiency is still prevented by different functional illumination means 12. In addition, if an illumination target range covers a wide range resulting from a large size of the housing rack 2 or a wide range for placement of the containers 3, for example, the illumination target range may be divided and the divided ranges may be handled by multiple illumination means 12. By doing so, illuminance reduction of illumination light or excessive deformation of the shape of illumination light can be prevented.

A storage space may be set in a plane. For example, light may be illuminated on a floor surface, a conveyor transport surface, and various types of tables. In such cases, multiple storage spaces are set in a predetermined plane range. A worker can be instructed on an introduction position (placement position) or a taking-out position of an item by movement of illumination light within this plane range.

Furthermore, the sorting system 1 is not limited to the configuration of housing and sorting an item W into a container 3 in the housing rack 2. For example, the sorting system 1 may be configured to take out an item from a storage space instructed by an illumination position in a housing rack instructed by light illumination and to sort the item taken out into a storage space instructed by an illumination position at transport means instructed by light illumination. Specifically, the sorting system 1 is applicable both to sorting works including picking and assorting, and is applicable to work of taking out a product from a container, etc. and work of introducing the product into a container, etc. during each of the sorting works.

In addition, the angle adjusting mechanism 13 may use a rotary axis line other than two axes. In the case of two axes, the direction of the first rotary center axis line and that of the second rotary center axis line may be determined by a rotary axis in the vertical direction and a rotary axis in the horizontal direction, for example.

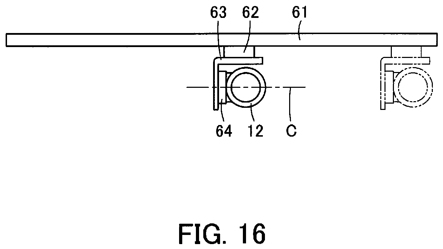

Furthermore, as shown in Fig. 16, the angle adjusting mechanism 13 may have a configuration formed by combining movement in the transverse direction along a slide guide 61 and rotation around a horizontal axis line about a rotary axis line C. In this configuration, a slide body 62 is attached movably to the slide guide 61. In addition, the illumination means 12 is attached through a drive body 64 to a bracket 63 fixed to a slide body 62 so as to be rotatable about the rotary axis line C. Then, the illumination means 12 moves in the right-left direction toward a position above a column including an illumination position along the slide guide 61 while rotating in the front-back direction about the rotary axis line C, thereby changing a light illumination direction. In this case, the light illumination direction is changed only in the longitudinal direction relative to the illumination position. This makes it unlikely that the shape of illumination light will be deformed, so that the illumination light is easily recognized visually.

It is noted that Lighting and turning off of the illumination means 12 by the control means 14 may be achieved by one of a configuration where the control means 14 switches power supply to the illumination means 12 on and off, and a configuration where the control means 14 transmits an ON signal and an OFF signal to a power supply circuit.

In addition, time of starting lighting of the light source part of the illumination means 12 is set before completion of the operation of the angle adjusting mechanism 13 to attain an operation objective. Lighting of the light source part may be started before the operation of the angle adjusting mechanism 13 is started, simultaneously with start of the operation, or after start of the operation. If lighting of the illumination means 12 is started to coincide with timing in a period from before start of the operation of the angle adjusting mechanism 13 to immediately after start of the operation, movement of light is started from a storage space where the worker X did work immediately before or a position near this storage space. In this case, the worker X easily recognizes start of motion of the light to guide the worker X more effectively.

The position of light illuminated from the illumination means 12 in the reference posture (reference illumination position) may be located in a neighborhood including the display means 10. It is noted that locating the light position in the neighborhood including the display means 10 may mean that light is illuminated entirely or partially on the display means 10 itself or light is illuminated on an area around the display means 10.

The display means 10 displays work information about work (a pick count, for example). Each time a worker is to do work, the worker checks the display means 10 for acquiring work information.

Thus, starting movement of light from the reference illumination position allow the worker to check the display means and the movement of the light for tructing a working position in doing a series of working operations. This allows the worker to understand work information and a working target corresponding to the work information efficiently, thereby increasing working efficiency.

It is noted that timing of starting movement of light from the reference illumination position may be delayed from timing of starting display of work information by the display means 10. This allows the worker to understand work information more easily.

It is noted that for the operation of the angle adjusting mechanism 13 for switching from one storage space to a difference storage space, the control means 14 operates the angle adjusting mechanism 13 by an operation load required for switching from an operation objective corresponding to the one storage space to an operation objective corresponding to the different storage space. Additionally, the control means 14 may read the operation load stored in advance in the storage portion for switching from the one storage space to the different storage space, and operate the angle adjusting mechanism 13 based on the read operation load.

### INDUSTRIAL APPLICABILITY

The present invention is used in a sorting system for sorting an item, for example.

### REFERENCE SIGNS LIST

- 1: Sorting system
- 3: Container as illumination position
- 11: Instruction device
- 12: Illumination means
- 13: Angle adjusting mechanism
- 14: Control means

## Claims

1. An instruction device (11) to instruct a worker on one storage space as a working target by light illumination, the one storage space belonging to multiple storage spaces set within a predetermined range, the instruction device (11) comprising:-
illumination means (12) that illuminates light;
an angle adjusting mechanism (13) that changes the posture of the illumination means (12); and
control means (14) configured to control the illumination means (12) and the angle adjusting mechanism (13);
wherein the control means (14) comprises a storage portion that stores an operation objective for the angle adjusting mechanism (13) for realizing the posture of the illumination means (12) corresponding to each of the multiple storage spaces; wherein the control means (14) is configured to operate the angle adjusting mechanism (13) to change the illumination direction of light from the illumination means (12) to attain an operation objective;
**characterized in that**
the control means (14) is configured to make the illumination means (12) start light illumination before the operation of the angle adjusting mechanism (13) to attain the operation objective is completed; and
wherein the control means (14), after the operation of the angle adjusting mechanism (13) to attain the operation objective is completed, is configured to operate the angle adjusting mechanism (13) continuously so as to change the illumination direction of light from the illumination means (12) continuously within a predetermined range while making the illumination means (12) illuminate light.

2. An instruction device (11) according to claim 1, wherein
when a working target is changed from the one storage space to a different storage space, the control means (14) is configured to start the operation of the angle adjusting mechanism (13) for switching from an operation objective at the one storage space to an operation objective at a different storage space.

3. An instruction device (11) according to claim 1, wherein
the storage portion stores an operation objective as a reference target for the angle adjusting mechanism (13) corresponding a reference posture as one posture of the illumination means (12); and
wherein the control means (14) is configured to operate the angle adjusting mechanism (13) to attain the reference target after work targeted at the one storage space is finished by the worker.

4. An instruction device (11) according to claim 2, wherein
the control means (14) is configured to make the illumination means (12) start light illumination in a period from before start of the operation to immediately after start of the operation of the angle adjusting mechanism (13) to attain the operation objective at the different storage space.

5. An instruction device (11) according to any preceding claim, wherein
the storage portion stores multiple operation objectives for the angle adjusting mechanism (13) to be attained at the one storage space and operation order for the multiple operation objectives; and
wherein after the operation of the angle adjusting mechanism (13) to attain the operation objective is completed, the control means (14) is configured to operate the angle adjusting mechanism (13) so as to pass the multiple operation objectives by following the operation order while making the illumination means (12) illuminate light.

6. A sorting system comprising the instruction device according to any preceding claim.

## Patentansprüche

1. Eine Instruktionsvorrichtung (11), um einen Arbeiter an einem Lagerplatz über eine Lichtanzeige als Arbeitsziel anzuleiten, der eine Lagerplatz gehört zu mehreren Lagerplätzen, die in einem vorbestimmten Raum eingerichtet sind, die Instruktionsvorrichtung (11) umfassend:-
Beleuchtungsvorrichtung (12), die Licht ausstrahlt;
einen Winkeleinstellmechanismus (13), der die Stellung der Beleuchtungsvorrichtung (12) ändert; und
eine Regeleinrichtung (14), konfiguriert, die Beleuchtungsvorrichtung (12) und den Winkeleinstellmechanismus (13) zu steuern;
wobei die Regeleinrichtung (14) einen Lagerabschnitt umfasst, der ein Betriebsziel für den Winkeleinstellmechanismus (13) zur Ausführung der Stellung der Beleuchtungsvorrichtung (12), die jedem der mehreren Lagerplätze entspricht, einspeichert;
wobei die Regeleinrichtung (14) konfiguriert ist, den Winkeleinstellmechanismus (13) auszuführen, um die Beleuchtungsrichtung des Lichts von der Beleuchtungsvorrichtung (12) zu ändern, um ein Betriebsziel zu erreichen;
**dadurch gekennzeichnet, dass**,
die Regeleinrichtung (14) so konfiguriert ist, dass die Beleuchtungsvorrichtung (12) die Beleuchtung einschaltet, bevor der Vorgang des Winkeleinstellmechanismus (13) zum Erreichen des Betriebsziels abgeschlossen ist; und
wobei die Regeleinrichtung (14), nachdem der Vorgang des Winkeleinstellmechanismus (13) zum Erreichen des Betriebsziels abgeschlossen ist, so konfiguriert ist, dass der Winkeleinstellmechanismus (13) kontinuierlich läuft, um die Beleuchtungsrichtung des Lichts von der Beleuchtungsvorrichtung (12) kontinuierlich innerhalb eines vorbestimmten Bereichs zu ändern, solange die Beleuchtungsvorrichtung (12) Licht ausstrahlt.

2. Eine Instruktionsvorrichtung (11) nach Anspruch 1, wobei
wenn ein Arbeitsziel von einem Lagerplatz zu einem anderen Lagerplatz geändert wird, die Regeleinrichtung (14) konfiguriert ist, den Betrieb des Winkeleinstellmechanismus (13) für das Umschalten von einem Betriebsziel an dem einen Lagerplatz zu einem Betriebsziel an einem anderen Lagerplatz zu starten.

3. Eine Instruktionsvorrichtung (11) nach Anspruch 1, wobei
der Lagerabschnitt ein Betriebsziel als Referenzziel für den Winkeleinstellmechanismus (13) einspeichert, das einer Referenzstellung als eine Stellung der Beleuchtungsvorrichtung (12) entspricht; und
wobei die Regeleinrichtung (14) konfiguriert ist, den Winkeleinstellmechanismus (13) auszuführen, um das Referenzziel zu erreichen, wenn die Arbeit, die an dem einen Lagerplatz erfüllt werden soll, durch den Arbeiter abgeschlossen ist.

4. Eine Instruktionsvorrichtung (11) nach Anspruch 2, wobei
die Regeleinrichtung (14) so konfiguriert ist, dass die Beleuchtungsvorrichtung (12) die Beleuchtung in einer Zeitspanne von vor dem Start des Betriebs bis unmittelbar nach dem Start des Betriebs des Winkeleinstellmechanismus (13) einschaltet, um das Betriebsziel an dem anderen Lagerplatz zu erreichen.

5. Eine Instruktionsvorrichtung (11) nach einem der vorhergehenden Ansprüche, wobei
der Lagerabschnitt mehrere Betriebsziele für den Winkeleinstellmechanismus (13), die an dem einen Lagerplatz erreicht werden sollen, und die Betriebsreihenfolge für die mehreren Betriebsziele einspeichert; und
wobei nach Abschluss des Betriebs des Winkeleinstellmechanismus (13), um das Betriebsziel zu erreichen, die Regeleinrichtung (14) konfiguriert ist, den Winkeleinstellmechanismus (13) auszuführen, um die mehreren Betriebsziele unter Einhaltung der Betriebsreihenfolge zu erreichen, während die Beleuchtungsvorrichtung (12) Licht ausstrahlt.

6. Eine Sortieranlage umfassend die Instruktionsvorrichtung nach einem der vorhergehenden Ansprüche.

## Revendications

1. Dispositif d'instruction (11) pour donner des instructions à un travailleur sur un espace de stockage en tant que cible de travail par éclairage de lumière, l'espace de stockage appartenant à de multiples espaces de stockage définis à l'intérieur d'une plage prédéfinie, le dispositif d'instruction (11) comprenant :
un moyen d'éclairage (12) qui éclaire la lumière ;
un mécanisme de réglage d'angle (13) qui modifie la posture du moyen d'éclairage (12) ; et
un moyen de commande (14) conçu pour commander le moyen d'éclairage (12) et le mécanisme de réglage d'angle (13) ;
dans lequel le moyen de commande (14) comprend une partie stockage qui stocke un objectif de mise en œuvre destiné au mécanisme de réglage d'angle (13) servant à réaliser la posture du moyen d'éclairage (12) correspondant à chacun des espaces de stockage multiples ;
dans lequel le moyen de commande (14) est conçu pour mettre en œuvre le mécanisme de réglage d'angle (13) afin de modifier la direction d'éclairage de la lumière provenant du moyen d'éclairage (12) pour atteindre un objectif de mise en oeuvre ;
**caractérisé en ce que**
le moyen de commande (14) est conçu pour faire en sorte que le moyen d'éclairage (12) commence l'éclairage de lumière avant que la mise en œuvre du mécanisme de réglage d'angle (13) pour atteindre l'objectif de mise en œuvre soit achevée ; et
dans lequel le moyen de commande (14), après que la mise en œuvre du mécanisme de réglage d'angle (13) pour atteindre l'objectif de mise en œuvre est terminée, est conçu pour mettre en œuvre le mécanisme de réglage d'angle (13) en continu de manière à changer la direction d'éclairage de la lumière provenant du moyen d'éclairage (12) en continu à l'intérieur d'une plage prédéfinie tout en faisant en sorte que le moyen d'éclairage (12) éclaire la lumière.

2. Dispositif d'instruction (11) selon la revendication 1 dans lequel
lorsqu'une cible de travail est modifiée depuis un espace de stockage vers un espace de stockage différent, le moyen de commande (14) est conçu pour démarrer la mise en œuvre du mécanisme de réglage d'angle (13) pour passer d'un objectif de mise en œuvre au niveau du premier espace de stockage à un objectif de mise en œuvre au niveau d'un espace de stockage différent.

3. Dispositif d'instruction (11) selon la revendication 1 dans lequel
la partie stockage stocke un objectif de mise en œuvre en tant que cible de référence pour le mécanisme de réglage d'angle (13) correspondant à une posture de référence en tant que posture du moyen d'éclairage (12) ; et
dans lequel le moyen de commande (14) est conçu pour mettre en œuvre le mécanisme de réglage d'angle (13) pour atteindre la cible de référence après que le travail ciblé au niveau de l'espace de stockage est terminé par le travailleur.

4. Dispositif d'instruction (11) selon la revendication 2 dans lequel le moyen de commande (14) est conçu pour faire en sorte que le moyen d'éclairage (12) commence l'éclairage de lumière dans une période allant d'avant le début de la mise en œuvre à immédiatement après le début de la mise en œuvre du mécanisme de réglage d'angle (13) pour atteindre l'objectif de mise en œuvre au niveau de l'espace de stockage différent.

5. Dispositif d'instruction (11) selon une quelconque revendication précédente, dans lequel
la partie stockage stocke de multiples objectifs de mise en œuvre destinés au mécanisme de réglage d'angle (13) devant être atteints au niveau d'un espace de stockage et un ordre de mise en œuvre destiné aux multiples objectifs de la mise en oeuvre ; et
dans lequel après que la mise en œuvre du mécanisme de réglage d'angle (13) pour atteindre l'objectif de mise en œuvre est terminé, le moyen de commande (14) est conçu pour mettre en œuvre le mécanisme de réglage d'angle (13) de manière à passer les objectifs de mise en œuvre multiples en suivant l'ordre de mise en œuvre tout en faisant en sorte que le moyen d'éclairage (12) éclaire la lumière.

6. Système de tri comprenant le dispositif d'instruction selon une quelconque revendication précédente.
